# FASCICULE DE BREVET EUROPEEN

(11) **EP 1 514 222 B1**
(45) Date de publication et mention de la délivrance du brevet: **24.01.2007**
(21) Numéro de dépôt: 03759975.0
(22) Date de dépôt: 12.06.2003
(51) Int. Cl.: G06K 7/00

(54) **DISPOSITIF DE CONTROLE ET / OU DE SURVEILLANCE UTILISANT UNE ETIQUETTE ELECTRONIQUE, UN LECTEUR ET UN ENCODEUR D'ETAT**
STEUER- UND/ODER ÜBERWACHUNGSEINRICHTUNG MIT EINEM ELEKTRONISCHEN LABEL UND LESER UND ZUSTANDSCODIERER
CONTROL AND/OR MONITORING DEVICE USING AN ELECTRONIC LABEL, A READER AND A STATE ENCODER

(30) Priorité: 13.06.2002 FR 0207299
(43) Date de publication de la demande: 16.03.2005
(73) Titulaire: INVENTIO AG, 6052 Hergiswil (CH)
(72) Inventeur: GIELIS, Michel, CH-6982 Agno (CH)
(86) Numéro de dépôt international: PCT/EP2003/007130
(87) Numéro de publication internationale: WO 2003/107255

(56) Documents cités:
- FR-A- 2 641 885
- US-A- 4 373 163
- US-A- 5 594 448

## Description

L'invention concerne, de façon générale, le secteur des technologies d'information, et notamment celui de l'identification par radio fréquence, connue sous l'acronyme anglo-saxon RFID (pour "Radio Frequency Identification").

Plus précisément, l'invention concerne un dispositif de contrôle et / ou de surveillance, comprenant au moins une première paire d'organes interactifs formée d'une étiquette électronique et d'un lecteur d'étiquette électronique en communication mutuelle par l'intermédiaire d'antennes radio respectives, le lecteur alimentant l'étiquette en énergie électrique par voie électromagnétique, et l'étiquette électronique comportant une mémoire dans laquelle est stocké un code d'identification qui lui est spécifique et qu'elle transmet sélectivement au lecteur, le dispositif de contrôle et / ou de surveillance comprenant en outre un encodeur d'état produisant un signal d'état représentatif d'un état logique ou analogique affectant les organes de la première paire d'organes interactifs

Un tel dispositif est connu de US-A-5 594 448.

Les étiquettes électroniques, encore appelées "étiquettes radio", "étiquettes intelligentes", ou encore "smart cards", appellation anglo-saxonne équivalente à "étiquettes intelligentes", sont aujourd'hui largement utilisées dans de nombreuses applications d'identification automatique, et notamment dans les systèmes antivol, la protection contre la contrefaçon, la gestion des supports de manutention, le contrôle des expéditions ou des réceptions, etc.

L'invention, qui repose sur l'identification d'un besoin jusqu'à présent resté latent, vise à élargir encore le champ d'application de ces étiquettes.

A cette fin, le dispositif de l'invention, par ailleurs conforme à la définition générique qu'en donne le préambule ci-dessus, est caractérisé en ce que l'encodeur d'état comprend au moins un aimant permanent porté par étiquette électronique et un capteur de champ magnétique porté par le lecteur.

Grâce à cet agencement, le lecteur dispose, sous la forme du signal d'état, d'une information qui non seulement est plus riche qu'un simple code d'identification dans la mesure il est relié à l'environnement physique local de l'étiquette, mais qui de surcroît se trouve, par construction, corrélée à ce code d'identification.

Dans un mode de réalisation avantageux de l'invention, l'étiquette est mobile par rapport au lecteur, et le signal d'état est représentatif d'une position relative de l'étiquette par rapport au lecteur.

Dans ces conditions, le couple que forment l'étiquette et le lecteur remplissent la fonction que remplit un contact électrique lié à une action mécanique, avec l'avantage supplémentaire que ce contact dispose, par le code d'identification de l'étiquette, d'une identification propre.

Il est par exemple possible de prévoir que l'encodeur d'état comprenne essentiellement une paire de pistes aimantées de façon permanente espacées l'une de l'autre, portées par l'étiquette, et une paire de capteurs à effet Hall correspondants, portés par le lecteur, que les pistes aimantées soient disposées en regard des capteurs à effet Hall correspondants pour une position relative de référence de l'étiquette par rapport au lecteur, et seulement pour cette position, et que le signal d'état prenne au moins deux valeurs logiques principales différentes, selon que l'étiquette est, ou non, dans sa position relative de référence par rapport au lecteur.

Une discrimination maximale des différents état peut être obtenue en prévoyant que les pistes de la paire de pistes aimantées présentent des polarités inverses.

Dans un premier mode de réalisation possible, l'étiquette est par exemple physiquement guidée, par rapport au lecteur, entre la position relative de référence et une pluralité de positions éloignées en passant par l'une au moins de deux positions relatives intermédiaires dans chacune desquelles une seule piste aimantée est détectée par un capteur à effet Hall, et le signal d'état prend au moins deux valeurs logiques secondaires différentes, selon que l'étiquette est, ou non, dans l'une des positions relatives intermédiaires.

L'étiquette peut ainsi être guidée en translation par rapport au lecteur suivant un axe de translation, les pistes aimantées étant espacées l'une de l'autre suivant cet axe de translation, et éventuellement inclinées par rapport à ce même axe de translation.

Dans ce cas, l'étiquette prend par exemple la forme d'une carte, le lecteur étant au moins partiellement plat.

Dans un autre mode de réalisation possible, l'étiquette est par exemple guidée en rotation par rapport au lecteur suivant un axe de rotation, les pistes aimantées étant angulairement espacées l'une de l'autre par rotation autour de l'axe de rotation.

Dans ce cas, l'étiquette prend avantageusement une forme cylindrique, le lecteur étant lui-même au moins partiellement cylindrique.

En pratique, le lecteur comprend typiquement un circuit d'alimentation et de mise en forme appartenant à l'encodeur d'état et lié aux capteurs à effet Hall, et un circuit de communication relié à l'antenne de ce lecteur.

Dans ces conditions, le circuit de communication peut adopter sélectivement au moins un état passif et un état actif, et le signal d'état peut faire passer le circuit de communication de son état passif à son état actif lors du passage de l'étiquette correspondante d'une position relative éloignée à une position relative intermédiaire.

Le dispositif de l'invention se montre particulièrement avantageux dans le cas où il comprend plusieurs paires d'organes interactifs dont chacune comprend une étiquette électronique et un lecteur d'étiquette, où les lecteurs des différentes paires d'organes interactifs sont reliés à un réseau de communication, et où toutes les étiquettes des différentes paires ont des codes d'identification différents.

Il est alors possible de doter ce dispositif d'un circuit de scrutation relié au réseau de communication, communiquant périodiquement avec chaque lecteur, chaque lecteur relevant le code d'identification de l'étiquette associée pour autant que ce lecteur et l'étiquette associée se trouvent dans leur position relative de référence, chaque lecteur transmettant au circuit de scrutation le code d'identification de l'étiquette associée, pour autant qu'il ait été relevé, et le circuit de scrutation comparant chaque code d'identification qui lui est transmis à un code de référence mémorisé, et produisant un signal d'anomalie en cas d'absence de l'un des codes à comparer ou de disparité des codes comparés.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue schématique d'une étiquette électronique modifiée pour être mise en oeuvre dans un dispositif conforme à l'invention;
- la figure 2 est une vue schématique d'un lecteur d'étiquette électronique, modifié pour coopérer, avec l'étiquette de la figure 1, dans un dispositif conforme à l'invention ;
- la figure 3A est une vue schématique représentant un lecteur et une étiquette électronique appartenant à un dispositif conforme à un premier mode de réalisation possible l'invention, et se trouvant dans une position relative éloignée;
- la figure 3B est une vue semblable à celle de la figure 3A, dans laquelle le lecteur et l'étiquette électronique se trouvent dans une de leur deux positions intermédiaires relatives qui sont a priori possibles;
- la figure 3C est une vue semblable à celle des figures 3A et 3B, dans laquelle le lecteur et l'étiquette électronique se trouvent dans leur position relative de référence;
- la figure 4 est une vue schématique éclatée et en perspective représentant un lecteur et une étiquette électronique appartenant à un dispositif conforme à un second mode de réalisation possible l'invention, et prévus pour subir une translation relative;
- la figure 5 est une vue schématique éclatée et en perspective représentant un lecteur et une étiquette électronique appartenant à un dispositif conforme à un second mode de réalisation possible l'invention, et prévus pour subir une rotation relative; et
- la figure 6 est une vue schématique représentant un dispositif conforme à l'invention, dans sa forme la plus aboutie.

Comme indiqué précédemment, l'invention concerne un dispositif destiné à opérer un contrôle et / ou une surveillance.

Ce dispositif comprend au moins une paire P d'organes interactifs, cette paire étant formée d'une étiquette électronique 1 et d'un lecteur 2 d'étiquette électronique.

De façon connue en soi, cette étiquette et ce lecteur sont en communication mutuelle par l'intermédiaire d'antennes radio respectives, telles que 10 et 20, le lecteur 2 alimentant l'étiquette 1 en énergie électrique par voie électromagnétique à travers ces antennes.

L'étiquette 1 comporte un circuit multifonction 11, relié à l'antenne 10, et assurant à la fois le filtrage et la distribution locale d'énergie électrique reçue sur l'antenne 10, la communication avec le lecteur 2, et plus généralement la gestion des ressources informatiques locales dont dispose l'étiquette 1.

Le circuit multifonction 11 dispose d'une mémoire 111 dans laquelle est stocké un code d'identification KID1 qui est spécifique à l'étiquette 1, et qui est conditionnellement transmis au lecteur 2, au moins sur requête de ce dernier.

De son côté, le lecteur 2 comprend un circuit de communication 22 relié à l'antenne 20 et chargé d'assurer à la fois le transfert d'énergie vers l'antenne 20 et le transfert de données à destination ou en provenance de cette antenne.

Le circuit de communication 22 est piloté par un circuit de contrôle 23, qui peut lui-même dialoguer avec un circuit d'affichage et / ou d'interface réseau 24.

Selon une caractéristique essentielle, le dispositif de l'invention comprend en outre un encodeur d'état par exemple formé d'un transducteur 3 et d'un circuit d'alimentation et de mise en forme 21.

Ce transducteur d'état, qui appartient au moins pour partie à l'étiquette 1, a pour fonction de produire un signal d'état, noté STAR, représentatif d'un état logique ou analogique propre à la paire P d'organes interactifs.

Plus précisément, le signal d'état STAT concerne une relation entre l'étiquette 1 et le lecteur 2, et ce signal d'état STAT est lu directement par ce lecteur 2.

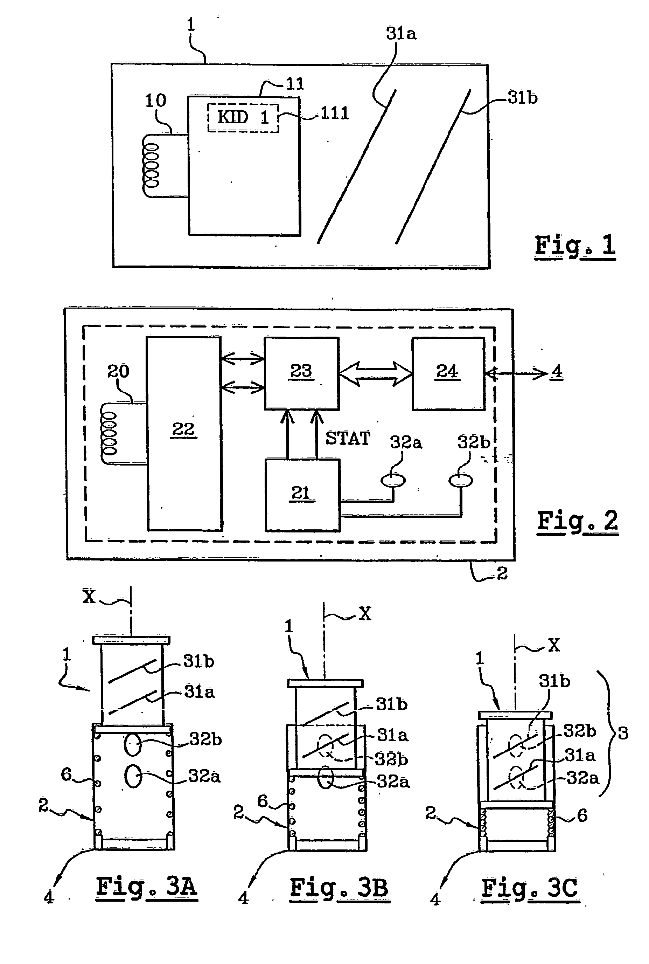

Le signal STAT concerne une relation entre l'étiquette 1 et le lecteur 2, et cette relation peut être constituée par une position relative de ces deux organes, comme l'illustrent les figures 1 à 5.

Dans ce cas, l'étiquette 1 est mobile par rapport au lecteur 2, et le signal d'état STAT est alors représentatif de la position relative adoptée à chaque instant par l'étiquette 1 par rapport au lecteur 2.

Par exemple, l'encodeur d'état comprend un ou plusieurs aimants permanents, tels que 31a et 31b, portés par l'un des organes de la première paire P d'organes interactifs, en l'occurrence par l'étiquette 1, et un ou plusieurs capteurs de champ magnétique, tels que 32a et 32b, porté par l'autre organe de cette première paire P d'organes interactifs, en l'occurrence par le lecteur 2.

Les figures 1 à 3C illustrent un mode de réalisation dans lequel le transducteur 3 appartenant à l'encodeur d'état comprend deux pistes aimantées, 31a et 31b, aimantées de façon permanente, espacées l'une de l'autre, et portées par l'étiquette 1, et deux capteurs à effet Hall correspondants, 32a et 32b, portés par le lecteur 2.

Les pistes aimantées 31a et 31b sont disposées en regard des capteurs à effet Hall correspondants 32a et 32b pour une position relative de référence de l'étiquette 1 par rapport au lecteur 2, illustrée à la figure 3C, et seulement pour cette position.

Les capteurs à effet Hall 32a et 32b sont reliés au circuit 21 d'alimentation électrique et de mise en forme, qui produit le signal d'état STAT et le fournit au circuit de contrôle 23, ce signal prenant au moins deux valeurs logiques principales différentes, selon que l'étiquette 1 est, ou non, dans sa position relative de référence par rapport au lecteur 2.

En d'autres termes, quel que soit le nombre de bits servant à coder le signal d'état STAT, le code représentatif de ce signal commence par un bit de poids fort égal à "1" ou à "0" (ou l'inverse) selon que l'étiquette 1 est, ou non, dans sa position relative de référence par rapport au lecteur 2.

Pour augmenter le nombre d'états susceptibles d'être discriminés les uns des autres, les pistes aimantées 31a et 31b présentent de préférence des polarités inverses.

Les figures 3A à 3C représentent de façon simplifiée un mode de réalisation dans lequel l'étiquette 1 est physiquement guidée par rapport au lecteur 2 et peut être poussée, suivant un axe de translation X, jusque dans sa position de référence à l'encontre de la force exercée par un ressort 6.

La figure 3A représente l'étiquette 1 dans une position éloignée par rapport au lecteur 2, c'est-à-dire dans une position dans laquelle aucun des capteurs à effet Hall 32a et 32b ne détecte une des pistes aimantées 31a et 31b, et dans laquelle les antennes 10 et 20 sont trop décalées l'une par rapport à l'autre pour permettre une communication entre le lecteur 2 et l'étiquette 1.

La figure 3B représente l'étiquette 1 dans une position dite "intermédiaire" par rapport au lecteur 2, c'est-à-dire dans une position dans laquelle un des capteurs à effet Hall 32a et 32b détecte l'une des pistes aimantées 31a et 31b, bien que les antennes 10 et 20 soient encore trop décalées l'une par rapport à l'autre pour permettre une communication entre le lecteur 2 et l'étiquette 1.

Deux positions intermédiaires sont a priori possibles, à savoir celle dans laquelle le capteur 32b détecte la piste aimantée 31a (figure 3B), et celle dans laquelle le capteur 32a détecte la piste aimantée 31b, même si le mouvement relatif de l'étiquette 1 par rapport au lecteur 2 peut être limité par des butées pour interdire à l'étiquette d'atteindre par exemple la seconde position intermédiaire.

Le signal d'état STAT produit par le circuit 21 d'alimentation électrique et de mise en forme prend au moins deux valeurs logiques secondaires différentes, selon que l'étiquette 1 est, ou non, dans l'une des positions relatives intermédiaires.

En d'autres termes, quel que soit le nombre de bits servant à coder le signal d'état SRAT, le code représentatif de ce signal comporte, après le bit de poids fort dont la valeur indique si l'étiquette 1 est, ou non, dans sa position relative de référencé par rapport au lecteur 2, un second bit dont la valeur indique si l'étiquette 1 est, ou non, dans l'une de ses positions relatives intermédiaires.

Dans le cas où l'étiquette 1 est guidée en translation par rapport au lecteur 2 suivant un axe de translation x, et comme le montrent les figures 1 à 4, les pistes aimantées 31a et 31b sont espacées l'une de l'autre suivant cet axe de translation X, comme le sont donc également les capteurs à effet Hall 32a et 32b.

Pour rendre plus progressive la détection des pistes aimantées 31a et 31b par les capteurs à effet Hall 32a et 32b, ces pistes 31a et 31b sont avantageusement inclinées par rapport à l'axe de translation X.

L'étiquette 1 et le lecteur 2 peuvent à priori prendre plusieurs formes.

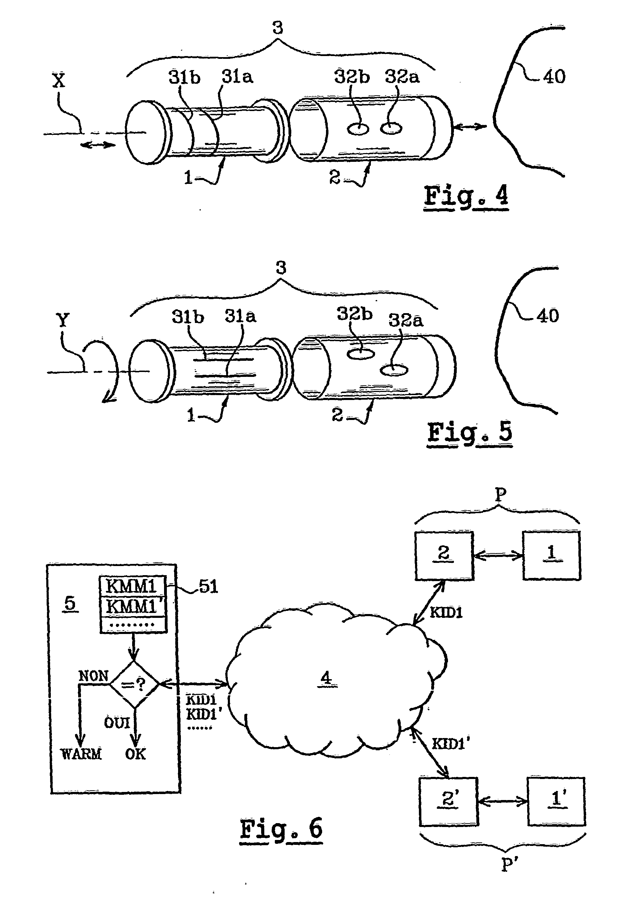

En particulier, l'étiquette 1 peut prendre soit la forme d'une carte (figures 1 à 3C), auquel cas le lecteur 2 est au moins partiellement plat, soit une forme cylindrique (figures 4 et 5), auquel cas le lecteur 2 est lui-même au moins partiellement cylindrique.

De plus, au lieu d'être guidée en translation par rapport au lecteur 2, l'étiquette 1 peut être guidée en rotation par rapport au lecteur 2 autour d'un axe de rotation Y (figure 5), auquel cas les pistes aimantées 31a et 31b sont angulairement espacées l'une de l'autre par rotation autour de l'axe de rotation Y, comme le sont donc également les capteurs à effet Hall 32a et 32b.

Pour éviter la nécessité d'alimenter l'antenne 20 de façon permanente, il peut être opportun de prévoir que le circuit de communication 22 se trouve par défaut dans un état passif, dans lequel l'antenne 20 n'est pas alimentée, et que ce circuit de communication 22 ne soit déplacé dans un état actif, dans lequel l'antenne 20 est alimentée, que pour certaines positions relatives de l'étiquette 1 par rapport au lecteur 2.

Par exemple, lorsque l'étiquette 1 passe d'une position relative éloignée à une position relative intermédiaire, c'est-à-dire lorsque le second bit de poids fort du signal d'état STAT transmis au circuit de contrôle 23 change de valeur, ce circuit de contrôle 23 peut faire passer le circuit de communication 22 de son état passif à son état actif, ce mode de fonctionnement évitant l'alimentation permanente de l'antenne 20.

Le dispositif de l'invention développe le plus grand nombre de ses avantages lorsqu'il comprend (figure 6) un réseau de communication 4, par exemple formé par un bus 40 ou l'incluant, plusieurs paires d'organes interactifs telles que P et P' reliées au réseau 4, et un circuit de scrutation 5 lui-même relié aux différents paires d'organes interactifs P et P' par l'intermédiaire du réseau de communication 4.

Chacune des paires d'organes interactifs, telles que P et P', comprend une étiquette électronique, telle que 1 et 1' , et un lecteur d'étiquette, tel que 2 et 2', les lecteurs des différentes paires P et P' d'organes interactifs étant reliés au circuit de scrutation 5 par le réseau de communication 4, et toutes les étiquettes des différentes paires P et P' d'organes interactifs ayant des codes d'identification différents, tels que KID1 et KID1'.

Le circuit de contrôle 23 de chaque lecteur, tel que 2 ou 2', est par exemple programmé de manière à transmettre à l'étiquette correspondante 1 ou 1', par l'intermédiaire du circuit de communication 22, une requête de transmission du code d'identification KID1 ou KID' de cette étiquette 1 ou 1', lorsque le signal d'état STAT reçu par le circuit de contrôle 23 de ce lecteur 2 ou 2' indique que ce même lecteur, et l'étiquette 1 ou 1' associée, se trouvent dans leur position relative de référence, et seulement dans ce cas.

Si tel est le cas, l'étiquette 1 ou 1' lit son code d'identification KID1 ou KID1' dans sa mémoire 111, et le retransmet au lecteur 2 ou 2' associé.

Le lecteur 2 ou 2', pour autant qu'il ait acquis le code d'identification KID1 ou KID' de l'étiquette associée 1 ou 1', retransmet ce code au circuit de scrutation 5 par l'intermédiaire du circuit d'affichage et / ou d'interface réseau 24 de ce lecteur, et du réseau 4.

Le circuit de scrutation 5, qui communique périodiquement avec chaque lecteur tel que 2 et 2', est en mesure de recevoir le code d'identification conditionnellement émis par chaque lecteur et d'en identifier la provenance.

Ce circuit de scrutation 5 dispose d'une mémoire 51 dans laquelle sont stockés des codes de référence tels que KMM et KMM', chacun de ces codes étant représentatif du code d'identification qu'un des lecteurs, tels que 2 ou 2', est spécifiquement supposé émettre, et ces codes de référence étant mémorisés dans un ordre donné de scrutation dés différents lecteurs.

A la scrutation de chaque lecteur tel que 2 ou 2', le circuit de scrutation compare le code d'identification, tel que KID1 ou KID1', que lui transmet ce lecteur au code de référence mémorisé correspondant, KMM ou KMM'.

Dans le cas où le code d'identification KID1 ou KID1' n'est pas fourni par le lecteur scruté, ce qui signifie que ce lecteur et l'étiquette correspondante ne se trouvent pas dans leur position de référence, ou dans le cas où le code d'identification KID1 ou KID1' fourni par le lecteur scruté diffère du code KMM ou KMM' qu'il aurait dû produire, ce qui signifie qu'une interversion s'est produite entre deux étiquettes, le circuit de scrutation 5 produit un signal d'anomalie WARN, dont la valeur permet de préférence de distinguer l'une de l'autre ces deux types d'anomalie.

Dans le cas où les différents codes d'identification tels que KID1 et KID1' sont fournis par les différents lecteurs scrutés et concordent avec les codes de référence respectifs mémorisés tels que KMM et KMM', le circuit de scrutation 5 poursuit son fonctionnement normal et procède à une nouvelle phase de scrutation.

## Revendications

1. Dispositif de contrôle et / ou de surveillance, comprenant au moins une première paire (P) d'organes interactifs formée d'une étiquette électronique (1) et d'un lecteur (2) d'étiquette électronique en communication mutuelle par l'intermédiaire d'antennes radio respectives (10, 20), le lecteur (2) alimentant l'étiquette électronique (1) en énergie électrique par voie électromagnétique, et l'étiquette électronique (1) comportant une mémoire (111) dans laquelle est stocké un code d' identification (KID1) qui lui est spécifique et qu'elle transmet sélectivement au lecteur (2), le dispositif de contrôle et / ou de surveillance comprenant en outre un encodeur d'état (3, 21) produisant un signal d'état (STAT) représentatif d'un état logique ou analogique affectant les organes de la première paire (P) d'organes interactifs, **caractérisé en ce que** l'encodeur d'état (3, 21) comprend au moins un aimant permanent (31a) porté par étiquette électronique (1) et un capteur de champ magnétique (32a) porté par le lecteur (2).

2. Dispositif de contrôle et / ou de surveillance suivant la revendication 1, **caractérisé en ce que** l'étiquette (1) est mobile par rapport au lecteur (2), et **en ce que** le signal d'état (STAT) est représentatif d'une position relative de l'étiquette (1) par rapport au lecteur (2).

3. Dispositif de contrôlé et / ou de surveillance suivant la revendication 1, **caractérisé en ce que** l'encodeur d'état (3, 21) comprend une paire de pistes aimantées (31a, 31b) de façon permanente espacées l'une de l'autre, portées par l'étiquette (1), et une paire de capteurs à effet Hall correspondants (32a, 32b), portés par le lecteur (2), **en ce que** les pistes aimantées (31a, 31b) sont disposées en regard des capteurs à effet Hall correspondants (32a, 32b) pour une position relative de référence de l'étiquette (1) par rapport au lecteur (2), et seulement pour cette position, et **en ce que** le signal d'état (STAT) prend au moins deux valeurs logiques principales différentes, selon que l'étiquette (1) est, ou non, dans sa position relative de référence par rapport au lecteur (2).

4. Dispositif de contrôle et / ou de surveillance suivant la revendication 3, **caractérisé en ce que** les pistes (31a, 31b) de la paire de pistes aimantées présentent des polarités inverses.

5. Dispositif de contrôle et / ou de surveillance suivant la revendication 3 ou 4, **caractérisé en ce que** l'étiquette (1) est physiquement guidée, par rapport au lecteur (2), entre la position relative de référence et une pluralité de positions éloignées en passant par l'une au moins de deux positions relatives intermédiaires dans chacune desquelles une seule piste aimantée (31a; 31b) est détectée par un capteur à effet Hall (32b; 32a), et **en ce que** le signal d'état (STAT) prend au moins deux valeurs logiques secondaires différentes, selon que l'étiquette (1) est, ou non, dans l'une des positions relatives intermédiaires.

6. Dispositif de contrôle et / ou de surveillance suivant la revendication 5, **caractérisé en ce que** l'étiquette (1) est guidée en translation par rapport au lecteur (2) suivant un axe de translation (X), et **en ce que** les pistes aimantées (31a, 31b) sont espacées l'une de l'autre suivant cet axe de translation (X).

7. Dispositif de contrôle et / ou de surveillance suivant la revendication 6, **caractérisé en ce que** les pistes aimantées (31a, 31b) sont inclinées par rapport à l'axe de translation (X).

8. Dispositif de contrôle et / ou de surveillance suivant l'une quelconque des revendications 6 et 7, **caractérisé en ce que** l'étiquette (1) prend la forme d'une carte et **en ce que** le lecteur (2) est au moins partiellement plat.

9. Dispositif de contrôle et / ou de surveillance suivant l'une quelconque des revendications 5 à 7, **caractérisé en ce que** l'étiquette (1) est guidée en rotation par rapport au lecteur (2) suivant un axe de rotation (Y), et **en ce que** les pistes aimantées (31a, 31b) sont angulairement espacées l'une de l'autre par rotation autour de l'axe de rotation (Y).

10. Dispositif de contrôle et / ou de surveillance suivant l'une quelconque des revendications 6 et 9, **caractérisé en ce que** l'étiquette (1) prend une forme cylindrique et **en ce que** le lecteur (2) est lui-même au moins partiellement cylindrique.

11. Dispositif de contrôle et / ou de surveillance suivant l'une quelconque des revendications précédentes, combinée à la revendication 3, **caractérisé en ce que** le lecteur (2) comprend un circuit d'alimentation et de mise en forme (21) appartenant à l'encodeur d'état (3, 21) et lié aux capteurs à effet Hall (32a, 32b), et un circuit de communication (22) relié à l'antenne (20) de ce lecteur (2).

12. Dispositif de contrôle et / ou de surveillance suivant les revendications 5 et 11, **caractérisé en ce que** le circuit de communication (22) adopte sélectivement au moins un état passif et un état actif, et **en ce que** le signal d'état (STAT) fait passer le circuit de communication (22) de son état passif à son état actif lors du passage de l'étiquette (1) correspondante d'une position relative éloignée à une position relative intermédiaire.

13. Dispositif de contrôle et / ou de surveillance suivant l'une quelconque des revendications précédentes, **caractérisé en ce qu'**il comprend plusieurs paires (P, P') d'organes interactifs dont chacune comprend une étiquette électronique (1, 1') et un 25 lecteur d'étiquette (2, 2'), **en ce que** les lecteurs (2, 2') des différentes paires (P, P') d'organes interactifs sont reliés à un réseau de communication (4), et **en ce que** toutes les étiquettes (1, 1') des différentes paires (P. P') ont des codes d'identification (KID1, KID1') différents.

14. Dispositif de contrôle et / ou de surveillance suivant la revendication 13, **caractérisé en ce qu'**il comprend un circuit de scrutation (5) relié au réseau de communication (4), communiquant périodiquement avec chaque lecteur (2, 2'), **en ce que** chaque lecteur (2, 2') relève le code d'identification (KID1, KID1') de l'étiquette (1,1') associée pour autant que ce lecteur (2, 2') et l'étiquette associée (1, 1') se trouvent dans leur position relative de référence, **en ce que** chaque lecteur (2, 2') transmet au circuit de scrutation (5) le code d'identification (KID1, KID1') de l'étiquette associée (1, 1'), pour autant qu'il ait été relevé, et **en ce que** le circuit de scrutation (5) compare chaque code d'identification (KID1, KID1') qui lui est transmis à un code de référence mémorisé (KMM, KMM'), et produit un signal d'anomalie (WARN) en cas d' absence de l'un des codes à comparer ou de disparité des codes comparés.

## Claims

1. Control and/or monitoring device, comprising at least a first pair (P) of interactive elements (1, 2) formed by an electronic label (1) and an electronic label reader (2) in mutual communication by means of respective radio aerials (10, 20), the reader (2) supplying the label (1) with electrical energy by electromagnetic means and the label (1) comprising a memory (111) in which is stored an identification code (KID1), which is specific thereto and which it selectively transmits to the reader (2), the control and/or monitoring device additionally comprises a status encoder (3, 21) producing a status signal (STAT) representative of a logical or an analog state affecting the elements fo the first pair (P) of interactive elements, **characterised in that** the status encoder (3, 21) comprises at least one permanent magnet (31a) carried by the electronic label (1) and a magnetic field sensor (32a) carried by the reader (2).

2. Control and/or monitoring device according to claim 1, **characterised in that** the label (1) is movable relative to the reader (2) and **in that** the status signal (STAT) is representative of a relative position of the label (1) compared with the reader (2).

3. Control and/or monitoring device according to claim 3, **characterised in that** the status encoder (3, 21) comprises a pair of permanently magnetised spaced-apart tracks (31a, 31b) carried by the label (1) and a pair of corresponding Hall-effect sensors (32a, 32b), carried by the reader (2), **characterised in that** the magnetised tracks (31a, 31b) are disposed relative to the corresponding Hall-effect sensors (32a, 32b) for a reference relative position of the label (1) compared with the reader (2), and only for this position, and that the status signal (STAT) adopts at least two different principal logical values, according to whether or not the label (1) is in its reference relative position compared with the reader (2).

4. Control and/or monitoring device according to claim 3, **characterised in that** the tracks (31 a, 31 b) of the pair of magnetised tracks have inverse polarities.

5. Control and/or monitoring device according to claim 3 or 4, **characterised in that** the label (1) is physically guided relative to the reader (2) between the reference relative position and a plurality of distant positions while passing by at least one of the two intermediate relative positions, in each of which only one magnetised track (31a; 31b) is detected by a Hall-effect sensor (32b; 32a), and that the status signal (STAT) adopts at least two different secondary logical values according to whether or not the label (1) is in one of the intermediate relative positions.

6. Control and/or monitoring device according to claim 5, **characterised in that** the label (1) is guided in translational movement relative to the reader (2) along a translation axis (X) and that the magnetised tracks (31a, 31b) are spaced apart along this translation axis (X).

7. Control and/or monitoring device according to claim 6, **characterised in that** the magnetised tracks (31a, 31b) are inclined relative to the translation axis (X).

8. Control and/or monitoring device according to either one of claims 6 and 7, **characterised in that** the label (1) takes the form of a card and **in that** the reader (2) is at least partially flat.

9. Control and/or monitoring device according to any one of claims 5 to 7, **characterised in that** the label (1) is guided in rotational movement relative to the reader (2) along a rotational axis (Y) and that the magnetised tracks (31a, 31b) are angularly spaced apart rotationally about the rotation axis (Y).

10. Control and/or monitoring device according to either one of claims 6 and 9, **characterised in that** the label (1) has a cylindrical form and **in that** the reader (2) itself is at least partially cylindrical.

11. Control and/or monitoring device according to any one of the preceding claims combined with claim 3, **characterised in that** the reader (2) comprises a power supply circuit and pulse shaper (21) belonging to the status encoder (3, 21) and connected to the Hall-effect sensors (32a, 32b) and a communication circuit (22) connected to the aerial (20) of this reader (2).

12. Control and/or monitoring device according to claims 5 and 11, **characterised in that** the communication circuit (22) selectively adopts at least a passive state and an active state and **in that** the status signal (STAT) causes the communication circuit (22) to change from its passive state to its active state on passage of the corresponding label (1) from a distant relative position to an intermediate relative position.

13. Control and/or monitoring device according to any one of the preceding claims, **characterised in that** it comprises several pairs (P, P') of interactive elements, each of which comprises an electronic label (1, 1') and a label reader (2, 2'), that the readers (2, 2') of the different pairs (P, P') of interactive elements are connected to a communication network (4) and that all the labels (1, 1') of the different pairs (P, P') have different identification codes (KID1, KID1').

14. Control and/or monitoring device according to claim 13, **characterised in that** it comprises a scanning circuit (5) connected to the communication network (4) and communicating periodically with each reader (2, 2'), that each reader (2, 2') reads the identification code (KID1, KID1') of the associated label (1, 1') insofar as this reader (2, 2') and the associated label (1, 1') are in their reference relative position, that each reader (2, 2') transmits to the scanning circuit (5) the identification code (KID1, KID1') of the associated label (1, 1') insofar as it was read and that the scanning circuit (5) compares each identification code (KID1, KID1') transmitted thereto with a stored reference code (KMM, KMM') and produces an anomaly signal (WARN) in the case of the absence of one of the codes to be compared or in case of disparity of the compared codes.

## Patentansprüche

1. Steuer- und/oder Überwachungsvorrichtung, umfassend mindestens ein erstes Paar (P) interaktiver Elemente, welches aus einem elektronischen Label (1) und einem Lesegerät (2) für elektronische Label besteht und untereinander mit Hilfe von Radioantennen (10, 20) kommuniziert, wobei das Lesegerät (2) das elektronische Label (1) auf elektromagnetischem Wege mit elektrischer Energie versorgt und wobei das elektronische Label (1) einen Speicher (111) aufweist, in welchem ein Identifizierungscode (KID1) gespeichert ist, der dem Label eigen ist und den dieses selektiv an das Lesegerät (2) überträgt, wobei die Steuer- und/oder Überwachungsvorrichtung darüber hinaus einen Zustandscodierer (3, 21) umfasst, der ein Zustandssignal (STAT) erzeugt, welches einen logischen oder analogen Zustand wiedergibt, der die Elemente des ersten Paares (P) von interaktiven Elementen betrifft, **dadurch gekennzeichnet, dass** der Zustandscodierer (3, 21) mindestens einen Permanentmagneten (31a), der sich auf dem elektronischen Label (1) befindet, sowie einen Magnetfeldsensor (32a), der sich auf dem Lesegerät (2) befindet, umfasst.

2. Steuer- und/oder Überwachungsvorrichtung gemäß Anspruch 1, **dadurch gekennzeichnet, dass** das Label (1) gegenüber dem Lesegerät (2) beweglich ist und dass das Zustandssignal (STAT) die relative Stellung des Labels (1) gegenüber dem Lesegerät (2) wiedergibt.

3. Steuer- und/oder Überwachungsvorrichtung gemäß Anspruch 1, **dadurch gekennzeichnet, dass** der Zustandscodierer (3, 21) ein Paar Magnetstreifen (31a, 31b), die auf dauerhafte Weise magnetisiert sind und sich in einem gewissen Abstand zueinander auf dem Label (1) befinden, sowie ein Paar entsprechende Hallsensoren (32a, 32b), die sich auf dem Lesegerät (2) befinden, umfasst und dass es für die Magnetstreifen (31a, 31b) hinsichtlich der entsprechenden Hallsensoren (32a, 32b) eine relative Stellung gibt, und zwar ausschließlich diese eine Stellung, welche die relative Bezugsstellung des Labels (1) gegenüber dem Lesegerät (2) darstellt, und dass das Zustandssignal (STAT) mindestens zwei verschiedene logische Hauptwerte annimmt, je nachdem, ob das Label (1) sich in seiner relativen Bezugsstellung gegenüber dem Lesegeräts (2) befindet oder nicht.

4. Steuer- und/oder Überwachungsvorrichtung gemäß Anspruch 3, **dadurch gekennzeichnet, dass** die Streifen (31a, 31b) des Paares von Magnetstreifen eine entgegengesetzte Polarität aufweisen.

5. Steuer- und/oder Überwachungsvorrichtung gemäß Anspruch 3 oder 4, **dadurch gekennzeichnet, dass** sich das Label (1) in einer Führungsvorrichtung befindet, mit deren Hilfe sie gegenüber dem Lesegerät (2) zwischen der relativen Bezugsstellung und mehreren relativen entfernten Stellungen bewegt werden kann, wobei mindestens eine von zwei relativen Zwischenstellungen passiert wird, an denen jeweils nur ein Magnetstreifen (31a; 31b) von einem Hallsensor (32a; 32b) detektiert wird, und dass das Zustandssignal (STAT) mindestens zwei verschiedene logische Nebenwerte annehmen kann, je nachdem, ob sich das Label (1) in einer der relativen Zwischenstellungen befindet.

6. Steuer- und/oder Überwachungsvorrichtung gemäß Anspruch 5, **dadurch gekennzeichnet, dass** das Label (1) gegenüber dem Lesegerät (2) in einer Translationsbewegung entlang einer Translationsachse (X) geführt wird und dass die die Magnetstreifen (31a, 31b) dieser Translationsachse folgend einen Abstand zueinander aufweisen.

7. Steuer- und/oder Überwachungsvorrichtung gemäß Anspruch 6, **dadurch gekennzeichnet, dass** die Magnetstreifen (31a, 31b) gegenüber der Translationsachse (X) eine Neigung aufweisen.

8. Steuer- und/oder Überwachungsvorrichtung gemäß Anspruch 6 und 7, **dadurch gekennzeichnet, dass** das Label (1) die Form einer Karte aufweist und dass das Lesegerät (2) mindestens teilweise flach ist.

9. Steuer- und/oder Überwachungsvorrichtung gemäß den Ansprüchen 5 bis 7, **dadurch gekennzeichnet, dass** das Label (1) gegenüber dem Lesegerät (2) in einer Rotationsbewegung entlang einer Rotationsachse (X) geführt wird und dass die Magnetstreifen (31a, 31b) einer Rotationsbewegung um die Rotationsachse Y folgend einen Winkelabstand aufweisen.

10. Steuer- und/oder Überwachungsvorrichtung gemäß einem beliebigen der Ansprüche 6 bis 9, **dadurch gekennzeichnet, dass** das Label (1) eine zylindrische Form aufweist und dass das Lesegerät (2) selbst mindestens teilweise zylindrisch ist.

11. Steuer- und/oder Überwachungsvorrichtung gemäß einem beliebigen der vorhergehenden Ansprüche in Kombination mit dem Anspruch 3, **dadurch gekennzeichnet, dass** das Lesegerät (2) einen Versorgungs- und Konditionierungsschaltkreis (21), welcher Teil des Zustandscodierers (3,21) ist und welcher mit den Hallsensoren (32a, 32b) verbunden ist, sowie einen Kommunikationsschaltkreis (22), welcher mit der Antenne (20) des Lesegerätes (2) verbunden ist, umfasst.

12. Steuer- und/oder Überwachungsvorrichtung gemäß den Ansprüchen 5 und 11, **dadurch gekennzeichnet, dass** der Kommunikationsschaltkreis (22) auf selektive Weise mindestens einen passiven Zustand und einen aktiven Zustand annimmt und dass das Zustandssignal (STAT) den Kommunikationsschaltkreis (22) aus seinem passiven Zustand in seinen aktiven Zustand überführt, wenn das entsprechende Label (1) eine relative entfernte Stellung verlässt, um eine relative Zwischenstellung einzunehmen.

13. Steuer- und/oder Überwachungsvorrichtung gemäß einem beliebigen der vorhergehenden Ansprüche, **dadurch gekennzeichnet, dass** sie mehrere Paare (P, P') von interaktiven Elementen umfasst, von denen jedes ein elektronisches Label (1, 1') und Lesegerät (2, 2') für Label umfasst, und dass die Lesegeräte (2, 2') der verschiedenen Paare (P, P') von interaktiven Elementen mit einem Kommunikationsnetz (4) verbunden sind und dass sämtliche Label (1, 1') der verschiedenen Paare (P, P') unterschiedliche Identifizierungscodes (KID1, KID1') aufweisen.

14. Steuer- und/oder Überwachungsvorrichtung gemäß Anspruch 13, **dadurch gekennzeichnet, dass** sie einen Abfrageschaltkreis 5 umfasst, welcher mit dem Kommunikationsnetz 4 verbunden ist und zeitweise mit jedem der Lesegeräte (2, 2') kommuniziert, und dass jedes Lesegerät (2, 2') von dem entsprechenden Label (1, 1') den Identifizierungscode (KID1, KID1') abliest, sofern das entsprechende Label (1, 1') sich in seiner relativen Bezugsstellung befindet, und dass jedes Lesegerät (2, 2') den Identifizierungscode (KID1, KID1') des entsprechenden Labels (1, 1') an den Abfrageschaltkreis (5) überträgt, sofern der Code abgelesen wurde, und dass der Abfrageschaltkreis (5) jeden Identifizierungscode (KID1, KID1'), der ihm übermittelt wurde, mit einem gespeicherten Bezugscode (KMM, KMM') vergleicht und ein Abweichungssignal (WARN) erzeugt, wenn einer der zu vergleichenden Code fehlt oder wenn die verglichenen Codes ungleich sind.
